# EUROPEAN PATENT APPLICATION

(11) **EP 4 570 078 A1**
(43) Date of publication of application: **18.06.2025**
(21) Application number: 23315453.3
(22) Date of filing: 14.12.2023
(51) Int. Cl.: A23K 10/38, A23K 50/90

(54) **COMPOSITION TO FEED LARVAE COMPRISING BREWERS SPENT GRAIN AND ASSOCIATED METHOD**

(71) Applicant: Veolia Environnement, 75008 Paris (FR)
(72) Inventor: MENARD, Romain, 75008 Paris (FR); RICHARDS, Cameron, 75008 Paris (FR)
(74) Representative: Oak & Fox

(57) **Abstract**

The invention relates to a composition to feeding larvae comprising brewery by-products including at least brewer's spent grain and liquid yeast; characterized in that the moisture mass content of the composition ranges from 73 % to 82 %. The invention also relates to an insect-based feed formulation comprising one or more insect sources fed on such composition. The invention finally relates to associated methods to collect insects and produce such insect-based feed formulation.

## Description

### FIELD OF INVENTION

The present invention relates to an insect larvae feed composition, a method of preparing an insect feed composition and a method of feeding insects with such insect feed composition.

### BACKGROUND OF INVENTION

Due to decreasing resources and significant increases in the global population, there is a concern that the demand for feed may soon outstrip available feed resources. There has therefore been a recent increase in interest towards alternative feed resources for animals, especially for pet market, agriculture and fish farming.

Insect-based feeds are growing in popularity due to the many benefits associated with them. Insect-based feeds have improved sustainability and have a much lower impact on the environment compared to conventional foodstuffs. Many insect species provide a protein source, are highly digestible and have high palatability. Some insect species are considered to be comparable in nutritional value to chicken or soybean meal.

There is therefore a need for a sustainable feed formulation with reduced associated impact on ecosystems and on the environment. There is also a need for a feed formulation which is substantially free of chemicals, plastics, toxins, pests and/or pathogens. There is also a need for a feed formulation which has improved nutritional content, such as for example increased protein and oil sources, and/or improved bio-availability, and/or improved palatability compared to conventional feed formulations.

Brewer's spent grain (BSG)has been identified within the top 20 food waste streams with respect to European consumption and environmental impact (Graham Moates; REFRESH, "Top 20 Food Waste Streams"; eurefresh.org/top-20-food-waste-streams). It has been found that Brewer's spent grain is produced in high volumes with an associated high environmental impact. There is therefore a need for a high value, commercially useful material product which can be made from brewer's spent grain in order to reduce the amount of waste material being sent to landfill. Brewery waste includes brewer's spent grain, brewer's yeast, brewer's spent hops and trub, and diatomaceous earth slurry. Brewer's spent grain is defined as comprising the materials which remain after starch has been solubilized from grains.

GB2588595 provides a solution by describing an insect feed composition comprising BSG to produce an insect-based formulation such as an aquaculture feed formulation for salmon or shrimps. This solution advantageously improves the nutrient value of the insect species such as increasing the protein content of the insects.

However, one limitation of this solution is that insect larvae may exhibit reduced palatability and acceptance of feed containing high proportions of brewer's spent grain. This can result in lower feed consumption, slower growth rates, and, consequently, a higher Feed Conversion Ratio (FCR), limiting the economic feasibility of insect farming.

The present invention aims to address the technical problem of inefficient feed utilization in insect farming, specifically targeting the reduction of the FCR in composition using BSG. In traditional insect farming practices, the FCR, representing the amount of feed required to produce a unit of insect biomass, often hinders the economic viability and sustainability of insect protein production.

The problem to be solved is the suboptimal conversion of feed into biomass in insect larvae, resulting in higher production costs and resource utilization. The existing feed compositions using BSG do not sufficiently enhance the nutritional value of the feed for optimal larval growth and development, leading to an elevated FCR.

The technical objective of the invention is to provide a novel feed composition specifically formulated for insect larvae, effectively addressing the inefficiencies associated with traditional feed comprising BSG.

In summary, the technical objective of the invention is to reduce the Feed Conversion Ratio in insect farming by providing a specialized feed composition that optimizes the nutritional content for enhanced larval growth and development.

### SUMMARY

According to a first aspect, the invention relates to a composition to feeding larvae comprising brewery by-products including at least brewer's spent grain and liquid yeast. The moisture mass content of the composition ranges from 73 % to 82 %.

The inventive feed composition enhances the nutritional profile in a manner that accelerates larval growth, reduces developmental time, and ultimately lowers the FCR. By incorporating a unique combination of BSG, liquid yeast and moisture, the invention optimizes the conversion of feed into insect biomass, contributing to the economic feasibility and environmental sustainability of insect farming.

The solution provided by the invention involves a carefully crafted blend of ingredients that synergistically enhance the growth and development of insect larvae, thereby minimizing the amount of feed required to achieve a desired biomass.

In one embodiment, the mass concentration of the protein within the composition ranges from 7 % to 9 %.

In one embodiment, the mass concentration of the brewer spent grain ranges from 70 % to 93 %.

In one embodiment, the mass concentration of the brewer spent grain ranges from 70 % to 74 %, or from 70% to 78%, or from 75% to 77%.

In one embodiment, the mass concentration of the liquid yeast ranges from 7 % to 30 %. In one embodiment, the mass concentration of the liquid yeast ranges from 23 % to 26 %.

In one embodiment, the density of said composition is superior to 800 kg/m³. In one embodiment, the density of said composition ranges from 800 kg/m³ to 900 kg/m³.

In one embodiment, the composition comprises brewery by-products other than brewer's spent grain and liquid yeast such as spent hops, kieselgur, beer, dried yeast and/or malt hulls.

In one embodiment, the mass concentration of the ashes within the feed composition ranges from 0.1 % to 3 %, preferably from 0.5 % to 1.5%.

In one embodiment, the mass concentration of the crude fiber within the feed composition ranges from 1% to 10 %, preferably from 2 % to 5 %.

In one embodiment, the mass concentration of the starch within the feed composition ranges from 0.1 % to 5 %, preferably from 0.5 % to 2%.

According to a second aspect, the invention relates to a method for the collection of insect species fed on a composition.

The method comprises obtaining a feed composition according to the first aspect of the invention, introducing one or more insect species in their larval stage to the composition for a feeding period; and collecting the one or more insect species fed on the composition after the feeding period.

In one embodiment, the method comprises maintaining the temperature of the feed composition within a predetermined range of temperature during the feeding period. Preferably, said predetermined range of temperature ranges from 29°C to 33°C.

In one embodiment, the insect density introduced to the feed composition ranges from 80000/m² to 100000/m², preferably from 85000/m² to 95000/m².

In one embodiment, the insect species comprise Hermetia Illucens larvae.

In one embodiment, the method comprises collecting the larvae after the feeding period, preferably before pupation of said larvae.

According to a third aspect, the invention relates to a method for the production of an insect-based feed formulation, comprising performing the steps of the method according to the second aspect of the invention; and converting the one or more insect species fed on the composition into an insect-based feed.

According to a fourth aspect, the invention relates to an insect-based feed formulation comprising one or more insect sources fed on a feed composition according to the first aspect of the invention or obtained by the method according to the third aspect of the invention.

### BRIEF DESCRIPTION OF FIGURES

Fig. 1 is a graph representing the FCR of the larvae of Hermetia Illucens calculated on day 6 on a feed composition depending of the initial moisture content on day 1 of said feed composition.
Fig. 2 is a graph representing the FCR of the larvae of Hermetia Illucens calculated on day 6 on a feed composition depending of the average temperature of said feed composition during the feeding period.
Fig. 3 is a graph representing the FCR of the larvae of Hermetia Illucens calculated on day 6 on a feed composition depending of the density of the initial feed composition on day 1.
Fig. 4 is a graph representing the yield obtained for a first test after the feeding period depending on the insect density introduced in the feed composition.
Fig. 5 is a graph representing the yield obtained for a second test after the feeding period depending on the insect density introduced in the feed composition.

### DETAILED DESCRIPTION

According to one aspect, the invention relates to a method for collecting insect species fed on a composition according to the present invention.

The method comprises obtaining a feed composition as described further in the present specification. The composition is preferably placed in tanks that will also receive the larvae. Preferably, a controlled environment suitable for insect farming is created. This environment should accommodate factors such as, external humidity, and lighting, aligning with the optimal conditions for the targeted insect species.

Then, the method comprises introducing one or more insect species suitable for protein production into the feed composition. In one example, the insect species comprise the Black Fly soldier (commonly known as "Hermetia Illucens"). The feeding phase is initiated by introducing the insect species to the feed composition obtained within the controlled environment.

Preferably, the insect species are introduced into the feed composition in their larval stage. By the larval stage, it has to be understood before pupation, which also includes that the insect species may be introduced into the feed composition before hatching to ensure that the larvae will be fed with the feed composition as soon as they hatch. More preferably, the insect species are introduced into the feed composition after hatching and no more than 1 day or 2 days after hatching.

At the conclusion of the feeding period, the insect species that have been fed on the specialized composition are collected. This collection may involve separating larvae from the substrate, employing sieving or similar techniques.

The feeding period may vary depending on the life cycle and growth rate of the targeted insect species. Regularly assess environmental conditions and feed availability to maintain optimal farming conditions. The feeding period may comprise a predefined time period such as 6 days for the Black fly soldier.

The "feeding period" should be understood as a period of time from the introduction of the larvae within the feed composition and the collection of said larvae from the feed composition. Alternatively, when insects are introduced within the feed composition before hatching the "feeding period" should be understood as the period of time from the hatch of the insects introduced within the feed composition to the collection of said insects from the feed composition.

In an alternative embodiment, the collection occurs depending of the larvae into the feed composition. For example, a result of a visual inspection of the larvae may trigger the collection. In another example, a sample of larvae are collected for monitoring (such as weight monitoring and/or size monitoring) and said monitoring may trigger the collection of the full population of larvae into the feed composition.

Preferably, the collecting step occurs before the pupation of said larvae. Indeed, the larva stage is the most nutritionally valuable stage for certain applications, such as insect-based protein production. The larvae contain high levels of proteins, fats, and other essential nutrients, making them a desirable stage for harvest. Pupation marks a transition in the insect life cycle, and while pupae may also have nutritional value, the nutrient content of larvae is often considered superior.

The feed composition used in the method is now described.

The feed composition according to the invention comprises Brewer's spent grain (BSG), preferably BSG sourced from the brewery process.

Brewer's spent grain serves as a fundamental component of the feed composition. BSG is a by-product obtained from the brewing process, typically consisting of the solid remnants of malted barley after the extraction of sugars for beer production. The inclusion of BSG in the feed composition offers several key advantages.

BSG is inherently rich in proteins, fibers, and residual sugars. The proteins in BSG contribute essential amino acids required for the growth and development of insect larvae. Additionally, the presence of dietary fibers aids in digestive health and nutrient absorption. Utilizing BSG in the feed composition aligns with sustainable practices by repurposing a by-product of the brewing industry that would otherwise be treated as waste. This promotes a circular economy approach in which a secondary resource is transformed into a valuable primary resource for insect nutrition.

Preferably, the mass concentration of the BSG within the composition ranges from 70% to 93%. More preferably, the mass concentration of the BSG within the composition ranges from 70% to 74%.

The composition according to the invention comprises liquid yeast, preferably liquid yeast sourced from the brewing process.

This addition enhances the nutritional profile and palatability of the feed, addressing specific challenges observed in prior art and contributing to the overall efficiency of larval growth. The incorporation of liquid yeast offers several key benefits.

Liquid yeast is a rich source of amino acids, including essential amino acids that may be limited in BSG alone. The amino acids provided by the liquid yeast complement those present in BSG, creating a more balanced and complete protein profile. This supplementation addresses potential nutrient imbalances and promotes optimal growth and development in insect larvae. The incorporation of liquid yeast into the feed composition synergistically enhances the amino acid profile, introduces essential micronutrients, improves digestibility, and contributes to the overall palatability of the feed. This strategic combination with brewer's spent grain addresses limitations observed in prior art formulations, providing a more comprehensive and nutritionally balanced solution for promoting efficient larval growth in insect farming.

Preferably the mass concentration of the liquid yeast within the feed composition ranges from 7 to 30 %, more preferably from 23% to 26%.

In one embodiment, the mass concentration of BSG ranges from 70% to 74% and the mass concentration of liquid yeast ranges from 23% to 26%.

This composition has emerged as highly effective for optimizing the specialized feed composition for insect larvae. This unique blend of BSG and liquid yeast exhibits synergistic effects, contributing to the success of the feed in promoting optimal larval growth and achieving a reduction in the Feed Conversion Ratio (FCR). The key aspects of this synergistic composition include balanced nutrient profile and optimized amino acid availability.

Indeed, this combination of BSG and liquid yeast results in a feed composition with a well-balanced nutrient profile. Brewer's spent grain, rich in proteins and fibers, complements the amino acids and additional nutrients provided by the liquid yeast. This balanced composition addresses nutrient imbalances observed in prior art formulations, ensuring that the larvae receive a comprehensive and harmonious blend of macro and micronutrients. Liquid yeast, with its amino acid-rich content, complements the protein profile of BSG. The synergistic interaction between these two components ensures that the larvae receive an optimized supply of essential amino acids, fostering robust growth, and supporting critical physiological functions.

It has also been observed that this ratio accelerates larval growth, resulting in more efficient biomass production. This synergistic effect positively impacts the overall efficiency of the feed composition, reducing the time required for larval development and contributing to increased yields.

While the combination of 70%-74% brewer's spent grain (BSG) and 23%-26% liquid yeast has proven to be an optimal blend for the feed composition, the formulation is intentionally designed to be adaptable to the inclusion of diverse ingredients. This adaptability extends beyond brewery by-products, allowing for the incorporation of a range of supplementary components to enhance the sustainability and nutritional diversity of the feed. Key considerations in the adaptability of the feed composition includes versatility in brewery by-product integration and nutrient diversity.

The feed composition, rooted in the synergy of BSG and liquid yeast, is designed to seamlessly incorporate a variety of ingredients. This adaptability allows for the inclusion of diverse components, such as agricultural by-products, nutritional supplements, or other sustainable sources, fostering a flexible and versatile approach to insect nutrition.

The intentional openness to diverse ingredients contributes to a broad nutritional spectrum within the feed, meeting the complex macro and micronutrient needs of insect larvae across various developmental stages. This inclusivity promotes a comprehensive and well-rounded nutritional profile for optimal growth and development.

In one embodiment, the mass concentration of BSG ranges from 70% to 93%, or from 60% to 93% and the mass concentration of liquid yeast ranges from 7% to 30%. In one embodiment, the composition comprises other components such as but not limited to other brewery by-products.

The other brewery by-products advantageously comprise spent hops, kieselgur, beer (such as expired beer), dried yeast and/or malt hulls, preferably sourced from the brewing process.

After the hops have been used during the brewing process to impart their characteristics to the beer, they are often separated from the liquid. These leftover hops, now depleted of many of their desirable compounds, are what is known as "spent hops".

The kieselgur, also commonly known as "Diatomaceous earth", comprises a powder used as a filter in the brewery industry.

In one embodiment, the content of BSG, liquid yeast and optionally the other components of the composition are designed in such a way that the mass concentration of protein within the composition ranges from 7% to 9%.

The targeted protein concentration contributes to the reduction of the FCR by providing larvae with an appropriate amount of protein for their growth needs, increasing the conversion of feed into biomass and, consequently, improving the economic feasibility of insect farming. The protein is comprised within the BSG and the liquid yeast and optionally other components of the composition.

It's important to note that the exact composition of liquid yeast and BSG may depend on the type of liquid yeast and the type of BSG used in the feed composition and the specific production conditions. Indeed, the proteins present in liquid yeast or BSG can vary in quantity but are generally present at significant levels.

In one embodiment, the feed composition further comprises ashes. Preferably, the ashes are sourced from the brewery process.

Preferably, the mass concentration of the ashes within the composition ranges from 0.1 % to 3 %, preferably from 0.5 % to 1.5%.

Ashes are primarily composed of inorganic mineral elements that remain after the organic components of the composition which has been burned. Ashes can have an alkaline nature, and their addition to a feed composition may help in adjusting the pH levels. This can be particularly relevant in certain agricultural or animal husbandry contexts where maintaining a specific pH range in the digestive system is crucial for optimal nutrient absorption and microbial activity. Ashes can further advantageously act as binding agents, helping to bind together loose or powdery components in the feed. This can improve the overall consistency and physical characteristics of the feed composition, making it easier to handle, transport, and consume. Ashes often contain essential minerals such as calcium, phosphorus, potassium, magnesium, and trace elements like iron and zinc. Incorporating ashes into a feed composition can serve as a natural source of these minerals.

In one embodiment, the mass concentration of the ashes is determined by placing a sample of the feed composition in a controlled environment suitable for incineration, subject the sample to high temperatures to combust organic matter, leaving behind the mineral residue or ashes, weigh the residual ashes, record the initial weight of the feed composition before the incineration process and calculating the ashes content by dividing the weight of the residuals ashes by the initial weight of the sample.

In one embodiment, the feed composition further comprises crude fiber. Crude fiber is a complex carbohydrate that includes the indigestible portions of plant cell walls, such as cellulose, hemicellulose, and lignin.

Preferably, the mass concentration of the crude fiber within the feed composition ranges from 1% to 10 %, preferably from 2 % to 5 %.

In one embodiment, the feed composition further comprises starch as an additional component. Starch, as a complex carbohydrate, advantageously offers nutritional benefits that complement the feed composition made based on brewery by-products.

Preferably, the mass concentration of the starch within the feed composition ranges from 0.1 % to 5 %, preferably from 0.5 % to 2 %.

A pivotal aspect of the feed composition is ensuring that the initial formulation falls within a predefined moisture content range. While the moisture content at the outset is carefully controlled, it is acknowledged that moisture levels may naturally evolve during the growth of the larvae. Therefore, the initial moisture content range is essential to ensure an acceptable larval growth throughout the entire development period.

The moisture content may be influenced by both externally added water and inherent water content within key ingredients such as BSG and liquid yeast:
In one embodiment, the predefined moisture mass content of the feed composition ranges from 73 % to 82 %. Preferably, the predefined moisture mass content of the feed composition ranges from 75 % to 82 %, from 77 % to 81 % or from 78% to 80%.

It has been surprisingly found that the deliberate synergy between brewer's spent grain, liquid yeast, and the predefined moisture content range throughout larval growth establishes a dynamic and effective feed composition. This strategic interaction addresses nutrient imbalances, enhances palatability, improves digestibility, and promotes efficient larval growth, ultimately resulting in a substantial reduction in the Feed Conversion Ratio.

The moisture content of the composition can be determined by comparing the mass of a sample of the composition with the mass of the dried sample. Drying the composition is done, for example in a controlled environment suitable for evaporation of the water such as an oven until dehydration of the sample (i.e, when the mass of the composition stops decreasing). The moisture content is obtained by divided the mass of the dried composition by the mass of the initial sample.

### Example 1:

In order to validate the efficacy of the feed composition, a series of tests were conducted, focusing on the Feed Conversion Ratio (FCR) under varying moisture content conditions. These tests aimed to assess the impact of moisture content on larval growth and feed conversion efficiency. The results unequivocally demonstrate a notable correlation between moisture content levels and FCR, with the range from 76% to 82 % showcasing exceptional performance, with a maximum of efficiency around 79%.

The tests were designed, employing controlled environments to rear insect larvae under specific moisture content conditions. The moisture content of the feed composition was systematically varied, ranging from lower to higher values, encompassing the full spectrum of conditions that insect larvae may encounter during growth. A feed composition, comprising 76% BSG and 24% liquid yeast, remained consistent throughout the experiments. Moisture content adjustments were made by carefully manipulating external water addition.

The metric assessed during these tests was the FCR. FCR values were calculated by measuring the amount of feed consumed relative to the resultant larval biomass after a period of growth of 6 days, providing insights into the effectiveness of the feed composition under different moisture conditions.

Hermetia illucens larvae were placed in the composition and their FCR was calculated on day 1 and day 6 of their growth. On the first day of larval growth, FCR measurements were taken to evaluate the immediate impact of moisture content on feed conversion efficiency.

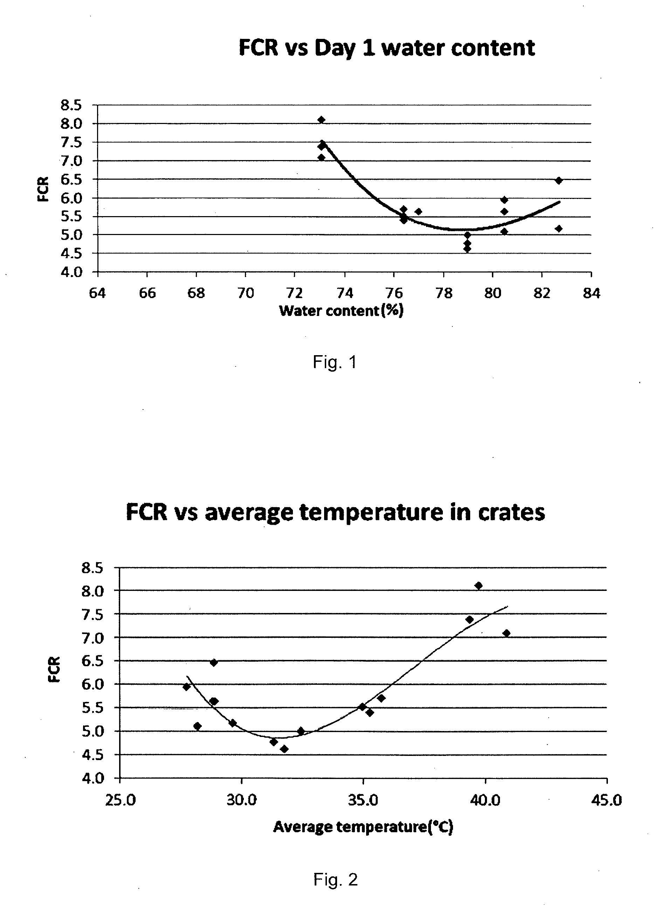

The results have been reported in figure 1.

Results consistently revealed a clear trend: as moisture content deviated from the predefined range (78% to 80%), there was a discernible impact on FCR. Specifically, FCR values demonstrated a notable decrease within the predefined range of moisture content.

Extending the analysis to day 6 allowed for a longitudinal evaluation of larval growth and FCR trends. The results on day 6 consistently reinforced the findings from day 1, highlighting that the predefined range of moisture content remained associated with a notably low FCR. Larvae fed within this optimal moisture range continued to exhibit enhanced growth rates and superior biomass production, reinforcing the sustained effectiveness of the specialized feed composition.

Larvae fed with the feed composition within this a moisture range from 76 % to 81% exhibited significantly improved feed conversion efficiency always inferior to 5.5 at both day 1 and day 6 compared to conditions with either lower or higher moisture levels.

Of particular significance is the observation that the Feed Conversion Ratio was consistently low within the range of moisture mass content from 78% to 80%. Larvae consuming the feed composition within this specified moisture range exhibited accelerated growth rates, higher biomass production, and overall enhanced feed conversion efficiency, aligning with the intended objectives of the invention.

### Example 2:

In one embodiment, the density of the feed composition according to the invention is superior to 800 kg/m³, or ranges from 800 kg/m³ to 900 kg/m³.

The density of the feed composition, defined as the mass per unit volume, has emerged as a significant determinant impacting the FCR. Tests were meticulously conducted to assess the correlation between feed composition density and FCR.

Testing protocols were established to systematically evaluate the impact of feed composition density on the Feed, Conversion Ratio. The feed composition, comprising 76% BSG, 24% liquid yeast remained consistent across experiments, with variations introduced only in the density of the feed. The density of the feed composition is modified by the water added within the feed composition.

The primary metric assessed during these tests was the FCR in the same manner as the one described for Example 1.

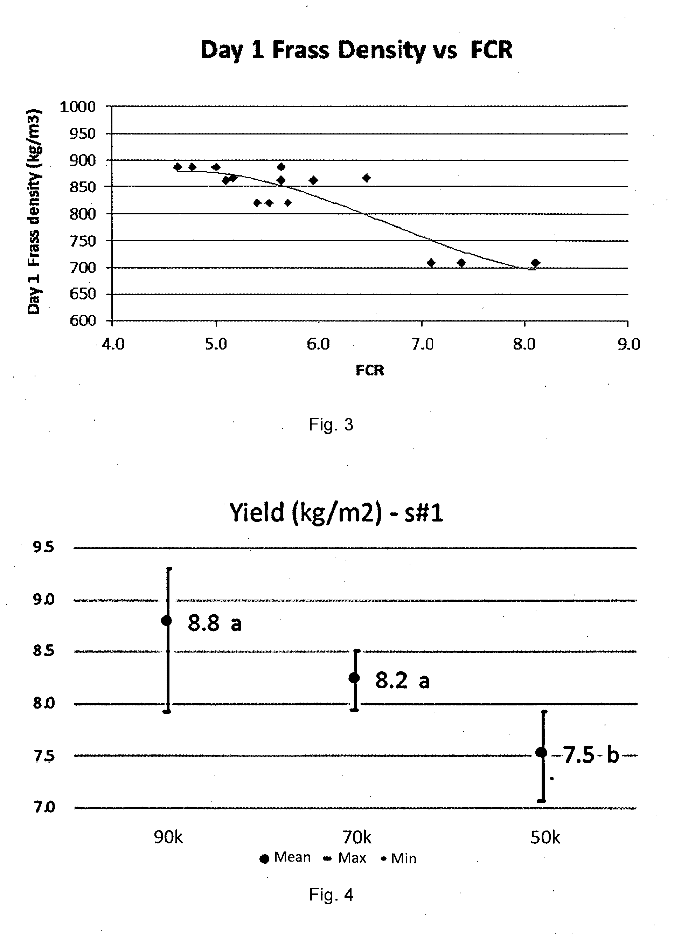

The results, illustrated in figure 3, show that the most favorable FCR values were consistently achieved when the feed composition density exceeded 800 kg/m³. Larvae fed with the feed composition at higher densities exhibited notably improved feed conversion efficiency by this unexpected correlation, translating into accelerated growth rates and enhanced biomass production. A feed composition density ranging from 800 kg/m³ to 900 kg/m³ show that the most favorable FCR values.

### Example 3:

In one embodiment, the temperature of the feed composition during the feeding period is controlled. For this purpose, a temperature control system may be provided.

The temperature control system preferably comprises a sensor adapted to measure the temperature of the composition. The sensor may comprise an infrared temperature sensor, thermocouples, or a resistance temperature detector.

The temperature control system also comprises a heater device to heat the feed composition. Heater device may comprise ceramic heaters, thermal heater resistance, heat lamps, or air circulation systems with heaters.

The temperature control system also comprises a controller design to receive a signal from the sensor and adapted to control the heater device in function of the received signal.

In one embodiment, the temperature of the feed composition during the feeding period is controlled in such a way that the temperature of the feed composition is maintained in a range of temperature from 29°C to 33 °C or from 30°C to 32°C, preferably during the whole feeding period.

Testing protocols were established to systematically evaluate the impact of temperature of the feed composition on the Feed Conversion Ratio. The feed composition, comprising 76% BSG, 24% liquid yeast remained consistent across experiments, with variations introduced only in the temperature of the feed composition during the feeding period.

The primary metric assessed during these tests was the FCR in the same manner as the one described for Example 1.

The results, illustrated in figure 2, show that the most favorable FCR values were consistently achieved when is comprised between 29° and 33°C and more favorable between 30°C and 32°C.

### Example 4:

In one embodiment, the insect density introduced into the feed composition is comprised between 80 000/m² and 100 000/m². The insect density is understood as the average number of insect and/or eggs disposed on the feed composition per surface unit.

Testing protocols were established to systematically evaluate the impact of temperature of the feed composition on the Feed Conversion Ratio. The feed composition, comprising 76% BSG, 24% liquid yeast remained consistent across experiments, with variations introduced only in the insect density introduced into the feed composition. 3 tests have been conducted for an insect density of 90 000 insects/m², 70 000 insects/m² and 50 000 insects/m².

The metric assessed during these tests was the yield. The yield is determined by calculating the weight of larvae per meter square after the feeding period.

The growth is determined by calculating the average weight of each larva after the feeding period.

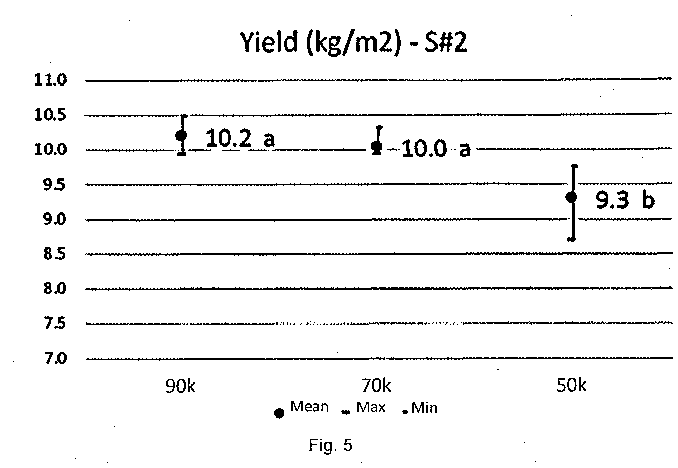

First test and a second test have been performed within the same conditions and the yield obtained for those tests are illustrated in respectively figure 4 and figure 5.

The results show that despite efficiency reduced, the yield obtained with the insect density of around 90 000/m² is more productive than the insect density of 50 000 or 70 000/m².

These results are not obvious because more insect density does not certainly lead to a higher yield. Indeed, the more the insect density, the less the FCR is because insects should share the feed.

Another aspect of the invention relates to an insect-based feed formulation comprising one or more insect source fed on a feed composition according to the invention or obtained by the method according to the invention.

The feed formulation integrates insect larvae that have been raised on the feed composition, as detailed in earlier sections. These larvae serve as a primary protein source, enriched with a balanced nutrient profile derived from the combination of brewer's spent grain (BSG), liquid yeast, starch, and optionally other complementary ingredients.

The feed formulation may be achieved by converting the one or more insect species fed on the composition into an insect-based feed. The process to realize such conversion are well-known by the person skilled in the art and may comprises steps of harvesting larvae, cleaning larvae, drying larvae, processing said dried larvae into a fine powder or granules through grinding or milling and combining the processed larvae powder with other ingredients to achieve a balanced nutrient profile of a feed formulation.

The feed formulation may be intended (but not limited) to feed fishes or shrimps.

The insect-based feed formulation presented herein represents a transformative approach to addressing the evolving needs of sustainable aquaculture. By harnessing the nutritional benefits of insect larvae raised on a feed composition according to the invention, this formulation pioneers a path towards a more resource-efficient, environmentally conscious, and economically viable future for feeding aquatic species. The inventors' innovative contributions to insect farming practices extend beyond the realm of larvae production, such as in aquaculture feed formulations.

## Claims

1. Feed composition for larvae comprising brewery by-products including at least brewer's spent grain and liquid yeast; **characterized in that** the moisture mass content of the composition ranges from 73 % to 82 %.

2. Feed composition according to claim 1, wherein the mass concentration of the protein ranges from 7 % to 9 %.

3. Feed composition according to claim 1 or claim 2, wherein the mass concentration of the brewer spent grain ranges from 70 % to 93 %.

4. Feed composition according to any of claims 1 to 3, wherein the mass concentration of the brewer spent grain ranges from 70 % to 74 %.

5. Feed composition according to any of claims 1 to 4, wherein the mass concentration of the liquid yeast ranges from 7 % to 30 %.

6. Feed composition according to any of claims 1 to 5, wherein the mass concentration of the liquid yeast ranges from 23 % to 26 %.

7. Feed composition according to any of claims 1 to 6, wherein the density of said composition is superior to 800 kg/m³.

8. Feed composition according to any of claims 1 to 7 comprising brewery by-products other than brewer's spent grain and liquid yeast such as spent hops, kieselgur, beer, dried yeast and/or malt hulls.

9. Feed composition according to any of claims 1 to 8, wherein the mass concentration of the ashes within the feed composition ranges from 0.1 % to 3 %, preferably from 0.5 % to 1.5%.

10. Feed composition according to any of claims 1 to 9, wherein the mass concentration of the crude fiber within the feed composition ranges from 1% to 10%, preferably from 2 % to 5 %.

11. Method for the collection of insect species fed on a composition, the method comprising:
▪ obtaining a feed composition according to any of claims 1 to 10;
▪ introducing one or more insect species in their larval stage to the composition for a feeding period; and
▪ collecting the one or more insect species fed on the composition after the feeding period.

12. Method according to claim 11, comprising maintaining the temperature of the feed composition within a predetermined range of temperature during the feeding period, wherein said predetermined range of temperature ranges from 29°C to 33°C.

13. Method according to claim 11 or claim 12, wherein the insect density introduced to the feed composition ranges from 80000/m² to 100000/m², preferably from 85000/m² to 95000/m².

14. Method to produce an insect-based feed formulation, comprising:
▪ performing the steps of the method according to any of the claims 11 to 13; and
▪ converting the one or more insect species fed on the composition into an insect-based feed.

15. An insect-based feed formulation comprising one or more insect sources fed on a feed composition according to any of claims 1 to 10 or obtained by the method according to claim 14.
